Europäisches Patentamt

European Patent Office

Office européen des brevets

(11) Veröffentlichungsnummer: **0 272 586 B1**

# (12) EUROPÄISCHE PATENTSCHRIFT

(45) Veröffentlichungstag der Patentschrift: **03.06.92**

(21) Anmeldenummer: **87118596.3**

(22) Anmeldetag: **15.12.87**

(51) Int. Cl.⁵: **G07C 7/00**, G01D 15/32

(54) **Diagrammscheibenaufnahme.**

(30) Priorität: **20.12.86 DE 3643739**

(43) Veröffentlichungstag der Anmeldung:
**29.06.88 Patentblatt 88/26**

(45) Bekanntmachung des Hinweises auf die
Patenterteilung:
**03.06.92 Patentblatt 92/23**

(84) Benannte Vertragsstaaten:
**BE ES FR GB GR IT LU NL**

(56) Entgegenhaltungen:
**DE-B- 1 266 036**
**US-A- 2 152 333**

(73) Patentinhaber: **Mannesmann Kienzle GmbH
Heinrich-Hertz-Strasse 45
W-7730 Villingen-Schwenningen(DE)**

(72) Erfinder: **Helmschrott, Norbert
Wasenstrasse 94
W-7730 Villingen-Schwenningen(DE)**

Rank Xerox (UK) Business Services

# Beschreibung

Die Erfindung betrifft eine Diagrammscheibenaufnahme mit einem scheibenförmigen Träger, an welchem eine Diagrammscheibenauflagefläche, eine Lagerbohrung und ein Zentrierdorn mit einem exzentrischen Mitnahmeansatz ausgebildet sind und welchem eine Antriebsverzahnung sowie Mittel zugeordnet sind, welche ein selbsttätiges Zentrieren und Haltern von mit einer Zentrieröffnung mit exzentrischer Aussparung versehenen Diagrammscheiben in einem Registriergerät gestattet, in welches die Diagrammscheiben durch einen Schlitz eingebbar sind.

Aus DE-B-1 266 036 ist eine Diagrammscheibenaufnahme mit selbsttätiger Zentrierung und Halterung bekannt

Bei den bisher üblichen Registriergeräten, in denen Diagrammscheiben als Aufzeichnungsträger Anwendung finden - als Beispiel seien Fahrtschreiber genannt - muß eine umständliche Handhabung beim Wechseln der Diagrammscheiben in Kauf genommen werden. So ist es beispielsweise erforderlich, eine Klappe oder einen Deckel zu öffnen, die die beschriebene Diagrammscheibe festhaltenden Spannmittel zu lösen, die Diagrammscheibe dem Gerät zu entnehmen, eine neue, unbeschriebene Diagrammscheibe auf den Zentrier- und Mitnahmedorn aufzufädeln, die Spann- bzw. Festhaltemittel erneut zu betätigen und den Deckel wieder zu schließen.

Eine derartige Einlegeprozedur wird beispielsweise in einem schlecht beleuchteten Fahrerhaus zu einer ziemlich lästigen Pflicht, und es besteht die Gefahr, daß das Einlegen einer Diagrammscheibe unsachgemäß ausgeführt wird, daß die kratz-und druckempfindliche Registrierschicht der Diagrammscheibe beschädigt wird und daß beispielsweise Stauchungen an der Zentrieröffnung der Diagrammscheibe vorkommen, die die Genauigkeit der Aufzeichnungen beeinträchtigen, was insbesondere dann schädlich ist, wenn diese später maschinell ausgewertet werden sollen.

Um diese subjektiven Mängel weitgehend auszuschalten und das Handhaben der Diagrammscheiben zu vereinfachen und somit die Akzeptanz für derartige Registriergeräte zu verbessern, ist es naheliegend, ein Registriergerät zu schaffen, bei dem die Diagrammscheiben durch einen Schlitz eingegeben, selbsttätig in Registrierposition gebracht und ebenso selbsttätig wieder ausgegeben werden. Ein derartiges Gerät erfordert eine Transporteinrichtung, die eine eingegebene Diagrammscheibe durch einen geeigneten Führungsschacht in die Zentrierposition transportiert sowie eine Diagrammscheibenaufnahme, die nicht nur zeitabhängig angetrieben, sondern auch senkrecht zur Diagrammscheibe bewegbar sein muß. Ferner ist es bei einem solchen Gerätekonzept, weil entsprechende Haltemittel nicht anbringbar und nicht betätigbar sind, im Gegensatz zu einer Halterung der Diagrammscheiben beim Einlegen von Hand, nicht möglich, daß die Halterung der Diagrammscheiben kraftschlüssig erfolgt. D. h. die Mitnahme der Diagrammscheiben durch die Diagrammscheibenaufnahme ist im wesentlichen auf eine formschlüssige Verbindung angewiesen. In diesem Falle dient der an der Diagrammscheibenaufnahme ausgebildete Zentrierdorn bzw. dessen exzentrischer Mitnahmeansatz nicht allein dem Zweck, die mit einer querschnittsgleichen Zentrieröffnung versehenen Diagrammscheiben zeitrichtig einlegen zu können, sondern er hat eine echte Mitnahmefunktion. Dies wiederum hat zur Folge, daß eine eingegebene Diagrammscheibe entweder mittels einer geeigneten, beispielsweise einen Reibrollenantrieb aufweisenden Vorrichtung oder die Diagrammscheibenaufnahme mit einer höheren Drehzahl solange anzutreiben ist, bis die formschlüssige Verbindung zwischen dem Zentrierdorn und der Diagrammscheibe gefunden ist. Dabei muß im letzteren Falle, wenn zeitrichtig positioniert werden soll, d. h. Diagrammscheiben mit aufgedruckter Zeitskala verwendet werden und der der aktuellen Uhrzeit entsprechende Skalenwert auf die Linie, auf der die Registrierorgane wirksam sind, ausgerichtet werden soll, der Antrieb mit höherer Drehzahl bis zum Erreichen der zeitrichtigen Position aufrechterhalten bleiben.

Dieser selbsttätige Positioniervorgang muß beispielsweise bei einem Fahrtschreiber innerhalb eines Zeitraums erfolgen, der mit Sicherheit nicht ausreicht, um ein Fahrzeug in Bewegung zu setzen. Andernfalls würden, wenn eine eingegebene Diagrammscheibe nicht rechtzeitig positioniert ist, Aufzeichnungen verlorengehen, d. h. der Positioniervorgang muß in wenigen Sekunden abgeschlossen sein.

Die hieraus resultierende, relativ hohe Positioniertdrehzahl einerseits und die leichte Verformbarkeit der aus ca. 0,15 mm starkem Material bestehenden Diagrammscheiben andererseits führen zu Funktionsstörungen insofern, als der Mitnahmeansatz an der Diagrammscheibenaufnahme über die betreffende Anschlagkante bzw. Mitnahmekante an der Zentrieröffnung der Diagrammscheibe hinweggleitet oder ein Aufnehmen der Diagrammscheibe nicht ohne Stauchung der Mitnahmekante erfolgt.

Aber auch im aufgenommenen Zustand besteht die Gefahr, daß aufgrund des erheblichen Registriermoments und der Tatsache, daß, wie bereits erwähnt, eine Entlastung der Mitnahmekante durch eine in axialer Richtung wirkende Spannkraft nicht gegeben ist, ein Aufstauchen und eine Beschädigung der Zentrieröffnung der Diagrammscheibe erfolgt. Da handelsübliche Diagrammscheiben in erheblichem Maße feuchtigkeitsempfindlich sind, ist hinsichtlich des geschilderten Problems eine besonders kritische Situation, die zum Totalausfall des Registriergerätes führen kann, dann gegeben, wenn das Registriergerät in feuchtem oder wechselndem Milieu eingesetzt wird.

Aufgabe der vorliegenden Erfindung war es daher, Mittel zu finden, die in einem gattungsgemäßen Registriergerät eine sichere Aufnahme einer eingegebenen Diagrammscheibe gewährleisten und Funktionsstörungen durch Stauchen der Mit-nahmekante der Zentrieröffnung einer Diagramm-scheibe vermeiden.

Die Lösung dieser Aufgabe sieht vor, daß der Mitnahmeansatz des Zentrierdorns gleich oder wenig höher ist als die Stärke der Diagrammscheiben, daß dem Zentrierdorn quer zur Dornachse ein flaches Ringsegment zugeordnet ist derart, daß das Ringsegment an dem Mitnahmeansatz axial anliegt, daß der größte Außenradius des Ringsegments gleich oder kleiner ist als das größte radiale Maß des Mitnahmeansatzes und daß ein Ende des Ringsegmentes in Umfangsrichtung eine die Ringfläche überragende schräge Fläche bildet.

Ein bevorzugtes Ausführungsbeispiel ist dadurch gekennzeichnet, daß der Innendurchmesser des Ringsegments kleiner ist als der Außendurchmesser des Zentrierdorns, daß ausgehend vom Mitnahmeansatz an dem Träger ein dem Innendurchmesser des Ringsegments entsprechender zylindrischer Ansatz ausgebildet ist und daß unter Zwischenlage des Ringsegments eine die Außen-konturen des Zentrierdorns komplettierende Hülse auf dem Ansatz befestigt ist. Dabei ist das Ringsegment dadurch ausgebildet, daß an einer flachen Scheibe mit einer dem Ansatz entsprechenden Bohrung eine Aussparung vorgesehen ist und daß in Umfangsrichtung eine der Aussparung zugeordnete Zunge aus der Scheibenebene herausgebogen ist.

Der Vorteil, den die Erfindung bietet, ist insbesondere darin zu sehen, daß die gestellte Aufgabe mit wenigen und sehr einfachen, letztlich auch maschinell montierbaren Mitteln wirksam gelöst ist. Das erfindungsgemäße Aufnehmen und Haltern einer Diagrammscheibe in einem Spalt, der gleich oder nur wenig größer ist als die Stärke der Diagrammscheibe, erfolgt sozusagen mittels eines Ein-Gang-Gewindes und vermeidet, daß bereits beim Aufnehmen Störungen auftreten. Der Gedanke, den Randbereich der Zentrieröffnung der Diagrammscheibe in einem engen Spalt oder einer ringförmigen Tasche aufzunehmen bzw. zu fassen, wenigstens jedoch die Anschlagfläche an dem Mitnahmeansatz auf ihrer gesamten Länge zu überdecken, bewirkt, daß Stauchungen der Mitnahmekante an der Zentrieröffnung der Diagrammscheibe gar nicht zustande kommen können. Sie werden dadurch unterdrückt, daß sich, sobald die geringste Verformung der Diagrammscheibe erfolgt, eine Entlastung der Mitnahmekante durch eine Kraftverteilung auf einer größeren Fläche einstellt. Ebenso wird ein Aufwerfen und Wellen der Diagrammscheibe im Bereich der Zentrieröffnung vermieden.

Im folgenden sei die Erfindung anhand der Zeichnungen näher erläutert: Es zeigen

FIGUR 1 ein Schnittbild der erfindungsgemäßen Diagrammscheibenaufnahme sowie der diese umgebenden Bauelemente des betreffenden Registriergerätes,

FIGUR 2 eine Draufsicht des Trägers der erfindungsgemäßen Diagrammscheibenauflage,

FIGUR 3 eine Draufsicht auf die komplette Diagrammscheibenaufnahme,

FIGUR 4 ein Schnittbild (Schnitt AB in FIGUR 3) des Ringsegments gemäß dem bevorzugten Ausführungsbeispiel,

FIGUR 5 eine Draufsicht eines weiteren Ausführungsbeispiels des Ringsegments,

FIGUR 6 eine Seitenansicht des Ringsegments gemäß FIGUR 5,

FIGUR 7 eine Ansicht der Diagrammscheibenaufnahme mit einer teilweise aufgenommenen Diagrammscheibe.

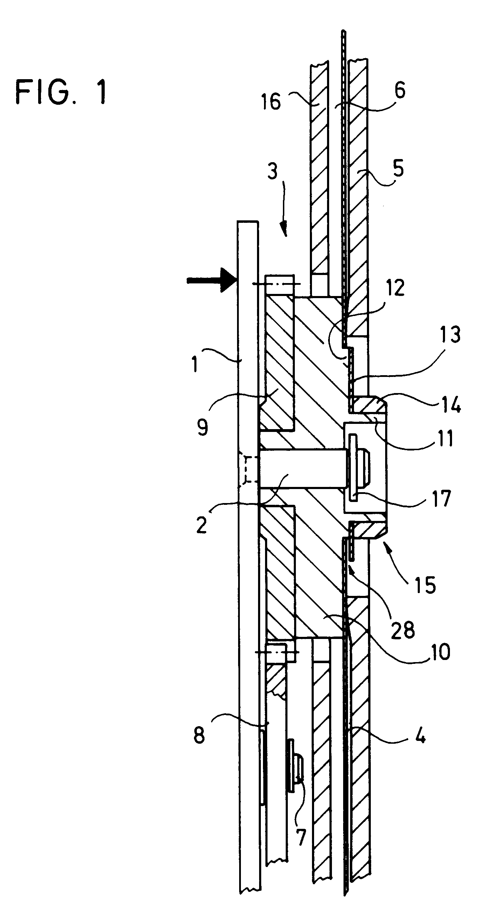

Wie FIGUR 1 zeigt ist an einem Arm 1 eine Achse 2 befestigt, auf der die Diagrammscheibenaufnahme 3 drehbar gelagert ist. Der Arm 1 ist in dem betreffenden Registriergerät innerhalb eines relativ kleinen Winkels - der Zentrierdorn muß le-diglich den Führungsschacht freigeben - schwenk-bar gelagert und steht, was mit einem Pfeil symbolisiert ist, unter der Wirkung einer Feder, die bewirkt, daß der Arm 1 in der dargestellten Stellung entweder an einem Anschlag gehalten wird oder die Diagrammscheibenaufnahme 3 unter Zwischenlage einer Diagrammscheibe 4 an der einen Wand 5 des der Diagrammscheibe 4 zugeordneten Führungsschachtes 6 anliegt. Das dabei zusätzlich auf das die Diagrammscheibenaufnahme 3 antreibende Laufwerk einwirkende Lastmoment ist im Vergleich zum Registriermoment vernachlässigbar. Der Zeitantrieb der Diagrammscheibenaufnahme 3 und der Positionierantrieb, falls das Positionieren, d. h. das zeitrichtige Stellen einer Diagrammscheibe mittels der Diagrammscheibenaufnahme 3 durch Umschalten auf eine höhere Drehzahl vorgenommen wird, erfolgen über ein auf dem Arm 1 angeordnetes Getriebe, auf dem lediglich ein auf einer Achse 7 gelagertes Zahnrad 8 dargestellt ist, welches mit einem Zahnrad 9 kämmt, das seinerseits drehfest mit einem Träger 10 der Diagrammscheibenaufnahme 3 verbunden ist. Der Träger 10 und das Zahnrad 9 sind selbstverständlich auch als ein Teil ausbildbar. An dem Träger 10 sind ein zylindrischer Ansatz 11 und ein exzentrischer Mitnahmeansatz 12 ausgebildet, auf welchem ein Ringsegment 13, das vom Ansatz 11 aufgenommen ist, axial anliegt. In dieser Position wird das Ringsegment 13 von einer Hülse 14 gehalten, an welcher die Außenkonturen des Zentrierdorns 15 der Diagrammscheibenaufnahme 3 ausgebildet sind. Mit 16 ist in FIGUR 1 die zweite Wand des Führungsschachtes 6 bezeichnet, 17 stellt eine Sicherungsscheibe dar, die der Achse 2, auf der die Diagrammscheibenauflage 3 gelagert ist, axial zugeordnet ist.

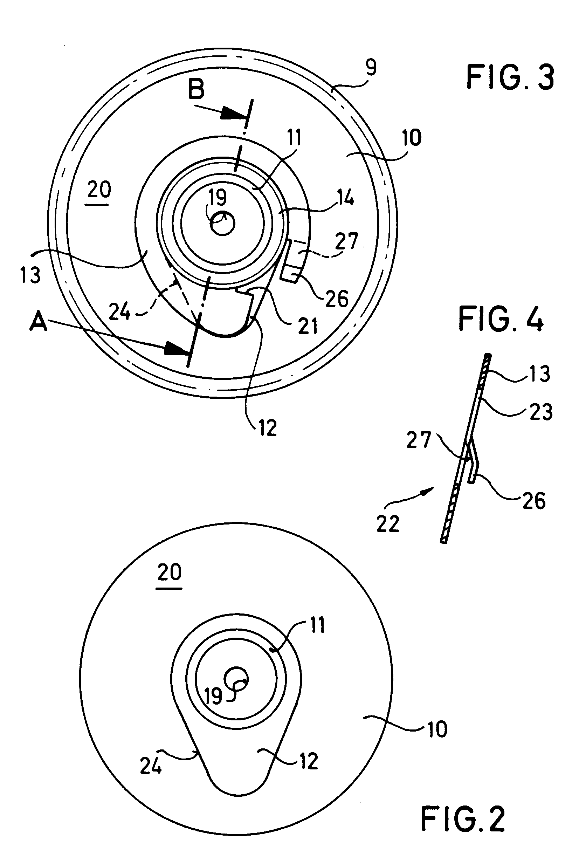

Die Draufsicht des Trägers 10 gemäß FIGUR 2 zeigt insbesondere die Querschnittsform des Mitnahmeansatzes 12, welcher der Zentrieröffnung 18 einer aufzunehmenden Diagrammscheibe 4 entspricht. Mit 19 ist die der Achse 2 zugeordnete Lagerbohrung gezeichnet, während 20 die Diagrammscheibenauflagefläche darstellt, aus der der Mitnahmeansatz 12 um das Maß der Diagrammscheibenstärke und einem gewissen Spiel, d. h. 0,15 + 0,05 mm herausragt.

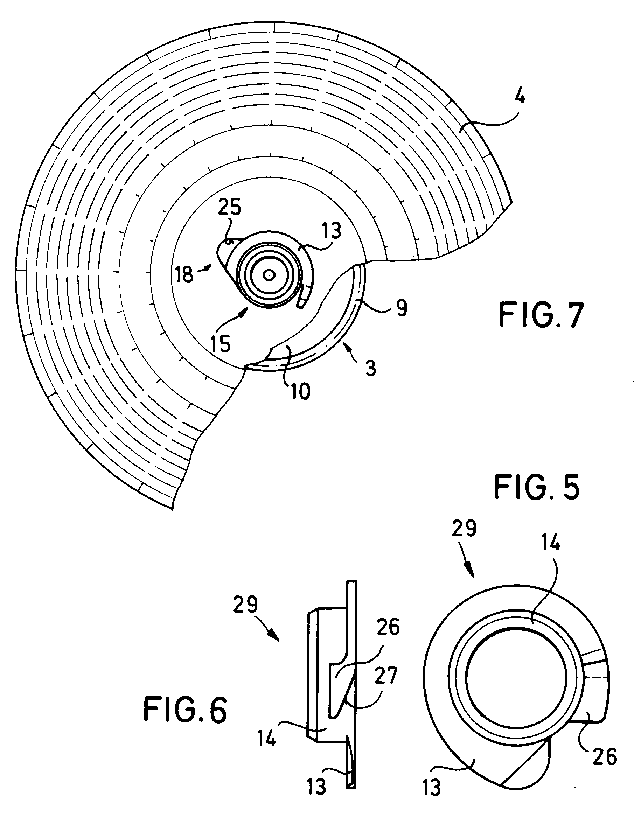

Aus der Draufsicht FIGUR 3 und dem Schnittbild FIGUR 4 ist ersichtlich, daß das Ringsegment 13 durch eine geeignete Aussparung 21 in einer flachen Scheibe 22, die eine dem Durchmesser des Ansatzes 11 entsprechende Bohrung 23 aufweist, gebildet ist. Dabei ist die Form des Ringsegments 13 derart gewählt, daß die Anschlagfläche 24 des exzentrischen Mitnahmeansatzes 12, mit der die Mitnahmekante 25 der Zentrieröffnung 18 der Diagrammscheibe 4 zusammenwirkt, überdeckt ist, sonst jedoch, um eine störungsfreie Aufnahme der Diagrammscheibe 4 zu gewährleisten, der Radius des Ringsegments 13 wesentlich kleiner ist als das größte radiale Maß des Mitnahmeansatzes 12. Dies geht insbesondere aus FIGUR 7 hervor, die einen Zustand während des Aufnahmevorganges zeigt, bei dem die Diagrammscheibe 4 erst zum Teil auf die Diagrammscheibenaufnahme 3 aufgenommen ist. Eine an der Scheibe 22 bzw. an dem Ringsegment 13 in Umfangsrichtung ausgebildete, d. h. aus der Scheibenebene herausgebogene Zunge 26 dient mit einer schrägen Fläche 27 dem Auffangen und Umlenken der Diagrammscheibe 4 in den schmalen Ringraum 28 zwischen die Diagrammscheibenauflagefläche 20 und dem Ringsegment 13.

Bei dem Ausführungsbeispiel gemäß den FIGUREN 5 und 6 ist das Ringsegment 13 unmittelbar an der Hülse 14 angeformt, so daß durch Aufpressen von nur einem Teil 29 eine besonders einfache Montage der erfindungsgemäßen Diagrammscheibenaufnahme 3 ermöglicht wird.

Der Vollständigkeit halber sei noch erwähnt, daß das Ringsegment als ein einen einteiligen Zentrierdorn 15 freistehend umgreifendes Blechteil ausgebildet sein kann, das mit seinem einen Ende auf dem Mitnahmeansatz 12 befestigt ist.

**Patentansprüche**

1. Diagrammscheibenaufnahme mit einem scheibenförmigen Träger (10), an welchem eine Diagrammscheibenauflagefläche (20), eine Lagerbohrung (19) und ein Zentrierdorn (15) mit einem exzentrischen Mitnahmeansatz (12) ausgebildet sind und welchem eine Antriebsverzahnung sowie Mittel zugeordnet sind, welche ein selbsttätiges Zentrieren und Haltern von mit einer Zentrieröffnung (18) mit exzentrischer Aussparung versehenen Diagrammscheiben in einem Registriergerät gestatten, in welches eine Diagrammscheibe durch einen Schlitz (6) eingebbar ist
dadurch gekennzeichnet,
daß der Mitnahmeansatz (12) des Zentrierdorns (15) gleich hoch oder wenig höher ist als die Stärke der Diagrammscheiben (19),
daß dem Zentrierdorn (15) quer zur Dornachse ein flaches Ringsegment (13) zugeordnet ist derart, daß das Ringsegment (13) an dem Mitnahmeansatz (12) axial anliegt,
daß der größte Außenradius des Ringsegments (13) gleich oder kleiner ist als das größte radiale Maß des Mitnahmeansatzes (12) und
daß ein Ende des Ringsegments (13) in Umfangsrichtung eine die Ringfläche überragende schräge Fläche (27) bildet.

2. Diagrammscheibenaufnahme nach Anspruch 1, dadurch gekennzeichnet, daß der Innendurchmesser des Ringsegments (13) im wesentlichen gleich ist dem Außendurchmesser des Zentrierdorns (15) und daß das Ringsegment (13) auf dem Mitnahmeansatz (12) befestigt ist.

3. Diagrammscheibenaufnahme nach Anspruch 1, dadurch gekennzeichnet, daß das Ringsegment (13) in Richtung des Endes, an dem die schräge Fläche (27) ausgebildet ist, sichelförmig verjüngt geformt ist.

4. Diagrammscheibenauflage nach Anspruch 1, dadurch gekennzeichnet, daß der Innendurchmesser des Ringsegments (13) kleiner ist als der Außendurchmesser des Zentrierdorns (15), daß ausgehend vom Mitnahmeansatz (12) an dem Träger (10) ein dem Innendurchmesser des Ringsegments (13) entsprechender zylindrischer Ansatz (11) ausgebildet ist und daß unter Zwischenlage des Ringsegments (13) eine die Außenkonturen des Zentrierdorns (15) komplettierende Hülse (14) auf dem Ansatz (11) befestigt ist.

5. Diagrammscheibenaufnahme nach Anspruch 4, dadurch gekennzeichnet,

daß das Ringsegment (13) dadurch ausgebildet ist, daß an einer flachen Scheibe (22) mit einer dem Ansatz (12) entsprechenden Bohrung (23) eine Aussparung (21) vorgesehen ist und

daß in Umfangsrichtung eine der Aussparung (21) zugeordnete Zunge (26) aus der Scheibenebene herausgebogen ist.

6. Diagrammscheibenaufnahme nach Anspruch 4, dadurch gekennzeichnet,

daß die Hülse (14) und das Ringsegment (13) als ein Teil (29) ausgebildet sind.

## Claims

1. Graph chart receiver having a disc-shaped support (10), on which there are constructed a graph chart bearing surface (20), a bearing bore (19) and a centring mandrel (15) having an eccentric entrainment shoulder (12), and with which there are associated a drive toothing and means which allow graph charts provided with a centring opening (18) with eccentric cutout to be automatically centred and held in a recording device into which a graph chart may be inserted through a slot (6), characterized in that the entrainment shoulder (12) of the centring mandrel (15) is of the same height or slightly higher than the thickness of the graph charts (19), in that a flat annular segment (13) is associated with the centring mandrel (15) transversely with respect to the axis of the mandrel such that the annular segment (13) bears axially against the entrainment shoulder (12), in that the largest external radius of the annular segment (13) is the same or smaller than the largest radial dimension of the entrainment shoulder (12), and in that one end of the annular segment (13) forms in the peripheral direction an oblique surface (27) projecting beyond the annular surface.

2. Graph chart receiver according to Claim 1, characterized in that the internal diameter of the annular segment (13) is substantially the same as the external diameter of the centring mandrel (15), and in that the annular segment (13) is secured to the entrainment shoulder (12).

3. Graph chart receiver according to Claim 1, characterized in that the annular segment (13) is shaped to be tapered in the shape of a sickle in the direction of the end on which the oblique surface (27) is constructed.

4. Graph chart bearing according to Claim 1, characterized in that the internal diameter of the annular segment (13) is smaller than the external diameter of the centring mandrel (15), in that, starting from the entrainment shoulder (12) on the support (10), a cylindrical shoulder (11) corresponding to the internal diameter of the annular segment (13) is formed, and in that a sleeve (14) completing the external contours of the centring mandrel (15) is secured to the shoulder (11) with the interposition of the annular segment (13).

5. Graph chart receiver according to Claim 4, characterized in that the annular segment (13) is constructed in that a cutout (21) is provided on a flat disc (22) having a bore (23) corresponding to the shoulder (12), and in that in the peripheral direction a tongue (26) associated with the cutout (21) is bent out of the plane of the disc.

6. Graph chart receiver according to Claim 4, characterized in that the sleeve (14) and the annular segment (13) are constructed as one part (29).

## Revendications

1. Dispositif récepteur de disques de diagramme avec un support (10) en forme de disque sur lequel sont formés une surface d'appui de disque de diagramme (2), un trou servant de palier (19) et une broche de centrage (15) avec une saillie d'entraînement excentrique (12) et auquel sont associés un engrenage d'entraînement ainsi que des moyens qui permettent un centrage et une fixation automatiques de disques de diagramme pourvus d'un orifice de centrage (18) avec un évidement excentrique dans un appareil enregistreur dans lequel un disque de diagramme peut être introduit par une fente (6),

caractérisé par le fait

que la saillie d'entraînement (12) de la broche de centrage (15) présente une hauteur identique ou légèrement supérieure que l'épaisseur des disques de diagramme (19),

qu'à la broche de centrage (15) est associé, transversalement à l'axe de broche, un segment annulaire plat (13), de telle sorte que ledit segment annulaire (13) appuie axialement sur la saillie d'entraînement (12),

que le plus grand rayon extérieur du segment annulaire (13) est identique intérieur à la plus grande cote radiale de la saillie d'entraînement (12) et

que l'une des extrémités du segment annulaire (13) forme, dans le sens du pourtour, une face oblique (27) dépassant la surface annulaire.

2. Dispositif récepteur de disques de diagramme selon la revendication 1,
caractérisé par le fait
que le diamètre intérieur du segment annulaire (13) est, pour l'essentiel, identique au diamètre extérieur de la broche de centrage (15) et
que le segment annulaire (13) est fixé sur la saillie d'entraînement (12).

3. Dispositif récepteur de disques de diagramme selon la revendication 1,
caractérisé par le fait
que le segment annulaire (13) présente, en direction de l'extrémité sur laquelle est formée la face oblique, un amenuisement falciforme.

4. Dispositif récepteur de disques de diagramme selon la revendication 1,
caractérisé par le fait
que le diamètre intérieur du segment annulaire (13) est plus petit que le diamètre extérieur de la broche de centrage (15), que, en partant de la saillie d'entraînement (12), une saillie cylindrique (11) correspondant au diamètre intérieur du segment annulaire (13) est formé sur le support (10) et
que, avec intercalation du segment annulaire (13), une douille (14) complétant les contours extérieurs de la broche de centrage (15) est fixée sur la saillie (11).

5. Dispositif récepteur de disques de diagramme selon la revendication 4,
caractérisé par le fait
que le segment annulaire (13) est formé du fait que, sur un disque plat (22) avec un alésage (23) correspondant à la saillie (12), il est prévu un évidement (21) et
que, dans le sens du pourtour, une languette (26) associée à l'évidement (21) est cintrée en dehors du plan de disque.

6. Dispositif récepteur de disques de diagramme selon la revendication 4,
caractérisé par le fait
que la douille (14) et le segment annulaire (13) sont réalisés pour former une seule pièce (29).

FIG. 1

FIG. 3

FIG. 4

FIG. 2

FIG.7

FIG. 5

FIG.6